# EUROPEAN PATENT SPECIFICATION

(11) **EP 4 132 020 B1**
(45) Date of publication and mention of the grant of the patent: **08.04.2026**
(21) Application number: 21796084.8
(22) Date of filing: 07.02.2021
(51) Int. Cl.: H04W 4/06, H04W 76/40, H04W 40/22, H04W 40/24, H04W 88/08, H04W 92/20

(54) **DATA TRANSMISSION METHOD AND APPARATUS, AND DEVICE**
DATENÜBERTRAGUNGSVERFAHREN UND -VORRICHTUNG SOWIE VORRICHTUNG
PROCÉDÉ ET APPAREIL DE TRANSMISSION DE DONNÉES, ET DISPOSITIF

(30) Priority: 30.04.2020 CN 202010368405
(43) Date of publication of application: 08.02.2023
(73) Proprietor: Huawei Technologies Co., Ltd., Shenzhen, Guangdong 518129, (CN)
(72) Inventor: XU, Bin, Shenzhen, Guangdong 518129 (CN); LI, Bingzhao, Shenzhen, Guangdong 518129 (CN); CHEN, Lei, Shenzhen, Guangdong 518129 (CN); YU, Haifeng, Shenzhen, Guangdong 518129 (CN)
(74) Representative: Gill Jennings & Every LLP
(86) International application number: PCT/CN2021/075803
(87) International publication number: WO 2021/218279

(56) References cited:
- EP-A1- 2 667 523
- EP-A1- 3 820 242
- WO-A1-2020/032127
- CN-A- 102 340 735
- CN-A- 110 351 700
- CN-A- 110 636 643
- US-A1- 2010 046 400
- CATT: "On Routing for IAB", vol. RAN WG2, no. Prague, Czech Republic; 20190826 - 20190830, 16 August 2019 (2019-08-16), XP051769186, Retrieved from the Internet <URL:http://www.3gpp.org/ftp/tsg_ran/WG2_RL2/TSGR2_107/Docs/R2-1911429.zip> [retrieved on 20190816]
- HUAWEI: "Destination Address and Forwarding Path based Routing for IAB", 3GPP DRAFT; R3-180816 ROUTING DESIGN FOR IAB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20180226 - 20180302, 14 February 2018 (2018-02-14), Mobile Competence Centre ; 650, route des Lucioles ; F-06921 Sophia-Antipolis Cedex ; France , XP051401229

## Description

### TECHNICAL FIELD

This application relates to the field of wireless communication technologies, and in particular, to a data transmission method, an apparatus, and a device.

### BACKGROUND

In 5G (5th generation mobile communication technology), to cope with explosive growth of mobile data traffic and massive device connections in the future, and meet emerging new services and application scenarios, a base station (gNB) may use a central node-distributed node (centralized unit-distributed unit, CU-DU) split architecture. To be specific, one gNB may include one CU and one or more DUs. The CU and the DU are connected through an F1 interface. The CU and a core network (5GC) are connected through an NG interface. A UE accesses the CU through the DU.

In a communication system having a relay function, for example, an integrated access and backhaul (integrated access and backhaul, IAB) system, current data transmission is mainly for a unicast service. To be specific, data of a unicast transmission service is sent to only one terminal device. However, if a multimedia broadcast multicast service (multimedia broadcast multicast service, MBMS) service is introduced to subsequent 5G communication, because the MBMS service needs to be simultaneously sent to a plurality of terminal devices, transmission of the MBMS service cannot be completed in the current manner of processing the unicast service in the relay communication system. Therefore, how to transmit the MBMS service in the relay communication system is an urgent problem to be resolved.
US2010046400A1 describes a method and apparatus for multicast communications in a multi-hop relay network, including sending an extended request message, wherein the request message includes a multicast connection identification, multicast distribution tree information and a path identification and receiving an extended response message.
EP2667523A1 discloses a method, an apparatus and a system for data transmission, which are used to realize support for transmission of MBMS service in a network scene with deployment of relay nodes.

This application provides a data transmission method, an apparatus, and a device, to transmit an MBMS service in a relay communication system.

According to a first aspect, this application provides a data transmission method in accordance with appended claim 1.

In this application, the first data packet is a data packet of a first multimedia broadcast multicast service (multimedia broadcast multicast service, MBMS) service, and carries the first information. The first information corresponds to the first MBMS service, and may include a routing address of the first MBMS service and/or a service identifier of the first MBMS service.

The second information is configured by the IAB donor (donor) for the first network device for the first MBMS service, and may include a routing address and/or a service identifier of a second MBMS service.

In this application, the first network device matches the second information of the first network device with the first information carried in the first data packet. If the second information is consistent with the first information, the first network device may consider that the first data packet is data that the first network device needs to receive. In this case, the first network device may send the first data packet to the UE that accesses the first network device. In this way, an MBMS service is transmitted in the relay communication system.

According to the first aspect, if the second information of the first network device matches the first information, the method further includes: The first network device sends the first data packet to N second network devices, where N is a positive integer.

In this application, when the second information of the first network device matches the first information in the first data packet, in addition to sending the first data packet to the UE that accesses the first network device, the first network device further sends the first data packet to the N second network devices. Herein, the N second network devices may be next-hop network devices of the first network device in the relay communication system.

According to the first aspect, in some possible implementations, the method further includes: The first network device obtains N+1 first data packets based on the first data packet. The first network device sends the N+1 first data packets to the terminal device and the N second network devices.

In this application, when the second information of the first network device does not match the first information of the first data packet, because the first data packet is the data of the first MBMS service, that is, another IAB node also needs to receive multicast data, in addition to sending the first data packet to the UE that accesses the first network device, the first network device may further send the first data packet to the N second network devices. In this way, an MBMS service is transmitted in the IAB system.

According to the first aspect, in some possible implementations, that the first network device sends the first data packet to N second network devices includes: The first network device obtains N first data packets based on the first data packet. The first network device sends the N first data packets to the N second network devices.

According to the first aspect, in some possible implementations, if the second information of the first network device does not match the first information, the method further includes: If a next-hop network device of the first network device is unavailable or there is no next-hop network device of the first network device, the first network device discards the first data packet.

According to the first aspect, in some possible implementations, the N second network devices are all next-hop network devices of the first network device.

Further, the N second network devices may be all available next-hop network devices of the first network device.

According to the first aspect, in some possible implementations, the first information may include the routing address corresponding to the first MBMS service and/or the service identifier corresponding to the first MBMS service. The second information may include the routing address configured for the first network device and/or the service identifier of the second MBMS service.

In this application, the routing address configured for the first network device may correspond to the second MBMS service. The second MBMS service may be the first MBMS service, or may be another MBMS service.

According to the first aspect, in some possible implementations, the method further includes: The first network device determines the N second network devices based on the first information. Alternatively, the first information further includes a path identifier (PATH ID). The method further includes: The first network device determines the N second network devices based on the path identifier.

According to the first aspect, in some possible implementations, the method further includes: The first network device obtains third information, where the third information indicates a mapping relationship between a path identifier and a second network device. That the first network device determines the N second network devices based on the path identifier includes: The first network device determines the N second network devices based on the path identifier and the third information.

According to the first aspect, in some possible implementations, before that the first network device sends the first data packet to the terminal device, the method further includes: The first network device indicates an IP layer not to perform first processing on the first data packet, where the first processing includes screening the first data packet based on an IP address carried in the first data packet or discarding the first data packet. Alternatively, the first network device modifies an IP address of the first data packet to a first IP address, where the first IP address is an IP address preconfigured for the first network device.

Herein, a backhaul adaptation protocol layer (backhaul adaption protocol, BAP) entity (BAP layer) of the first network device indicates the IP layer not to discard the first data packet, that is, indicates the IP layer not to screen the first data packet based on the IP address carried in the first data packet or discard the first data packet. Alternatively, a BAP entity may modify the IP address of the first data packet to the first IP address of the first network device.

According to the first aspect, in some possible implementations, that the first network device sends the first data packet to the terminal device includes: The first network device obtains fourth information, where the fourth information includes a multicast IP address configured for the first network device. The first network device sends the first data packet to the terminal device based on the multicast IP address.

According to a further aspect, this application provides a network device in accordance with appended claim 8.

### BRIEF DESCRIPTION OF DRAWINGS

To describe technical solutions in embodiments of this application or in the background more clearly, the following describes the accompanying drawings for describing embodiments of this application or the background.
FIG. 1 is a schematic diagram of a structure of a communication system according to an embodiment of this application;
FIG. 2 is a schematic diagram of a structure of a user-plane protocol stack of a communication system according to an embodiment of this application;
FIG. 3 is a schematic flowchart of a configuration method according to an embodiment of this application;
FIG. 4 is a first schematic flowchart of a data transmission method according to an embodiment of this application;
FIG. 5 is a schematic diagram of a BAP header format of a unicast service data packet according to an embodiment of this application;
FIG. 6 is a schematic diagram of a BAP header format of a multicast service data packet according to an embodiment of this application;
FIG. 7 is a schematic diagram of a BAP header format according to an embodiment of this application;
FIG. 8 is a second schematic flowchart of a data transmission method according to an embodiment of this application;
FIG. 9 is a third schematic flowchart of a data transmission method according to an embodiment of this application;
FIG. 10 is a schematic diagram of a structure of a communication apparatus according to an embodiment of this application;
FIG. 11 is a second schematic diagram of a structure of a communication apparatus according to an embodiment of this application; and
FIG. 12 is a third schematic diagram of a structure of a communication device according to an embodiment of this application.

### DESCRIPTION OF EMBODIMENTS

The following describes embodiments of this application with reference to the accompanying drawings in embodiments of this application. In the following descriptions, reference is made to the accompanying drawings that form a part of this application and show specific aspects of embodiments of this application in an illustrative manner or in which specific aspects of embodiments of this application may be used. It should be understood that embodiments of this application may be used in other aspects, and may include structural or logical changes not depicted in the accompanying drawings. For example, it should be understood that disclosed content with reference to the described method may also be applied to a corresponding device or system for performing the method, and vice versa. For example, if one or more specific method steps are described, a corresponding device may include one or more units such as functional units for performing the described one or more method steps (for example, one unit performing the one or more steps, or a plurality of units each performing one or more of the plurality of steps), even if such one or more units are not explicitly described or illustrated in the accompanying drawings. In addition, for example, if a specific apparatus is described based on one or more units such as functional units, a corresponding method may include a step used to implement functionality of the one or more units (for example, one step used to implement the functionality of the one or more units, or a plurality of steps each used to perform functionality of one or more of a plurality of units), even if such one or more steps are not explicitly described or illustrated in the accompanying drawings. Further, it should be understood that features of various example embodiments and/or aspects described in this specification may be combined with each other, unless otherwise specified.

For ease of understanding of this application, concepts in embodiments of this application are first explained.

Unicast (unicast) refers to a point-to-point communication technology, namely, single-point communication between a network device and a terminal device. The network device may separately send data to each terminal device. Unicast may also be referred to as a unicast transmission mode or a unicast transmission technology.

Sending performed in unicast transmission mode means: When sending a transport block (transport block, TB) corresponding to a protocol data unit (protocol data unit, PDU), a sending apparatus scrambles, by using a cell radio network temporary identifier (cell network temporary identifier, C-RNTI), the PDU or downlink control information (downlink control information, DCI) corresponding to the PDU, and a receiving apparatus receives the same PDU based on the C-RNTI. Alternatively, transmitting a PDU in unicast mode may mean: The PDU is transmitted through a radio bearer established for unicast transmission or through a channel specially designed for unicast.

Receiving performed in the unicast transmission mode means: When sending is performed in unicast mode, the receiving apparatus receives the PDU based on the C-RNTI, or the receiving apparatus receives the PDU through the radio bearer established for unicast transmission or through the channel used for unicast transmission.

Multicast (multicast) refers to a point-to-multipoint communication technology, which may also be referred to as a multicast transmission mode or a multicast transmission technology, and is for serving a multimedia broadcast multicast service. Multicast may also be referred to as groupcast, and may also be referred to as a broadcast technology in some generalized scenarios. However, multicast is different from a conventional broadcast technology. When the multicast transmission mode is used, a plurality of terminal devices simultaneously receive a same piece of data in a process in which a network device (for example, a base station) sends the data. Currently, multicast transmission technologies are mainly classified into two types: a multimedia broadcast multicast service single frequency network (multimedia broadcast multicast service single frequency network, MBSFN) service and a single-cell point-to-multipoint (single-cell point-to-multipoint, SC-PTM) service. In addition, another multicast transmission technology also falls within the scope of embodiments of this application. This is not limited.

Sending performed in multicast transmission mode means: When sending a TB corresponding to a PDU, a sending apparatus scrambles, by using a group radio network temporary identifier (group radio network temporary identifier, G-RNTI), the PDU or DCI corresponding to the PDU, and one or more receiving apparatuses receive the same PDU based on the same G-RNTI. Alternatively, transmitting a PDU in multicast mode may mean: A plurality of receiving apparatuses are notified of a location of a same PDU in a semi-persistent manner, and the plurality of receiving apparatuses may simultaneously receive the PDU. Alternatively, transmitting a PDU in multicast mode may mean: The PDU is transmitted through a radio bearer established for multicast transmission or through a channel specially designed for multicast.

Receiving performed in multicast transmission mode means: When sending is performed by a peer side in multicast mode, one of the plurality of receiving apparatuses receives the PDU based on the G-RNTI, or one of the plurality of receiving apparatuses receives the PDU through the radio bearer established for multicast transmission or through the channel used for multicast transmission.

An MBMS service refers to a point-to-multipoint unidirectional multimedia service. For example, multimedia broadcast services are sent over air interfaces to users in cells through common channels, or user-subscribed multicast services are sent to users in cells in a multicast mode, to save air interface resources.

An embodiment of this application provides a communication system. The communication system may be an IAB system or another communication system having a relay function, for example, a relay system that performs relaying based on a terminal device. Herein, the IAB system is used as an example. The communication system may include a terminal device, an IAB node (IAB node), and an IAB donor (IAB donor). The terminal device may communicate with the IAB node or the IAB donor, and a communication link between the terminal device and the IAB node is denoted as an access link (access link). In addition, the IAB node may communicate with another IAB node or the IAB donor, and a communication link between the IAB nodes or between the IAB node and the IAB donor is denoted as a backhaul link (backhaul link).

It may be understood that names of these links are merely examples, and do not represent a limitation on the links. When a version of the communication system changes, a corresponding name may alternatively be replaced with a name of a corresponding function in another wireless communication network, which falls within the protection scope of embodiments of this application.

The terminal device may be a device that provides voice or data connectivity for a user, for example, may also be referred to as a user equipment (UE, User Equipment), a mobile station (mobile station), a subscriber unit (subscriber unit), a station (STAtion), or terminal equipment (TE, Terminal Equipment). The terminal device may be a cellular phone (cellular phone), a personal digital assistant (PDA, Personal Digital Assistant), a wireless modem (modem), a handheld (handheld) device, a laptop computer (laptop computer), a cordless phone (cordless phone), a wireless local loop (WLL, Wireless Local Loop) station, a tablet computer (pad), or the like. With development of wireless communication technologies, any device that can access a wireless communication system, communicate with a network side of a wireless communication system, or communicate with another device by using a wireless communication system may be the terminal device in embodiments of this application, such as a terminal and a vehicle in intelligent transportation, a household device in a smart household, an electricity meter reading instrument in a smart grid, a voltage monitoring instrument, an environment monitoring instrument, a video surveillance instrument in an intelligent security network, or a cash register. In embodiments of this application, the terminal may communicate with a network device, and a plurality of terminals may also communicate with each other. The terminal may be fixed or movable.

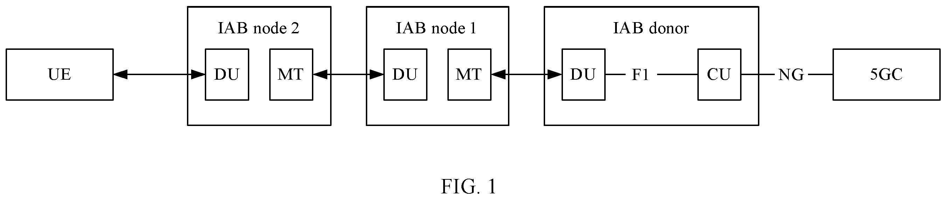

A two-hop data backhaul scenario is used as an example. FIG. 1 is a schematic diagram of a structure of a communication system according to an embodiment of this application. Refer to FIG. 1. The communication system 10 includes a terminal device (for example, a UE) 11, an IAB node 1, an IAB node 2, and an IAB donor.

The UE accesses the IAB node 2 (namely, an access IAB node), and the IAB donor is connected to a core network (for example, a 5GC) through an NG interface. The IAB donor is a previous-hop IAB node of the IAB node 1, the IAB node 1 is a previous-hop IAB node of the IAB node 2, and the IAB node 2 is a previous-hop IAB node of the UE. The IAB node 1 may be divided into two units: a distribution unit (distributed unit, DU) and a mobile terminal (mobile terminal, MT). The IAB node 2 may be divided into two units: a DU and an MT. The IAB donor may be divided into two units: a DU and a centralized unit (centralized unit, CU). The IAB node 1 DU communicates with the IAB node 1 MT through an internal interface. The IAB node 2 DU communicates with the IAB node 2 MT through an internal interface. The IAB donor DU communicates with the IAB donor CU through an F1 interface. An interface between the UE and the IAB node 2 (specifically, an interface between the UE and the IAB node 2 DU) is denoted as a Uu interface. An interface between the IAB node 2 and the IAB node 1 (specifically, an interface between the IAB node 2 MT and the IAB node 1 DU) is denoted as a Uu2 interface. An interface between the IAB node 1 and the IAB donor (specifically, an interface between the IAB node 1 MT and the IAB donor DU) is denoted as a Uu1 interface.

In actual application, the IAB system is further used in an N-hop data backhaul scenario, for example, a three-hop data backhaul scenario, a five-hop data backhaul scenario, or an eight-hop data backhaul scenario. Correspondingly, a quantity N of IAB nodes in the IAB system may be an integer greater than or equal to 2, for example, may be 3, 5, or 8. This is not specifically limited in embodiments of this application.

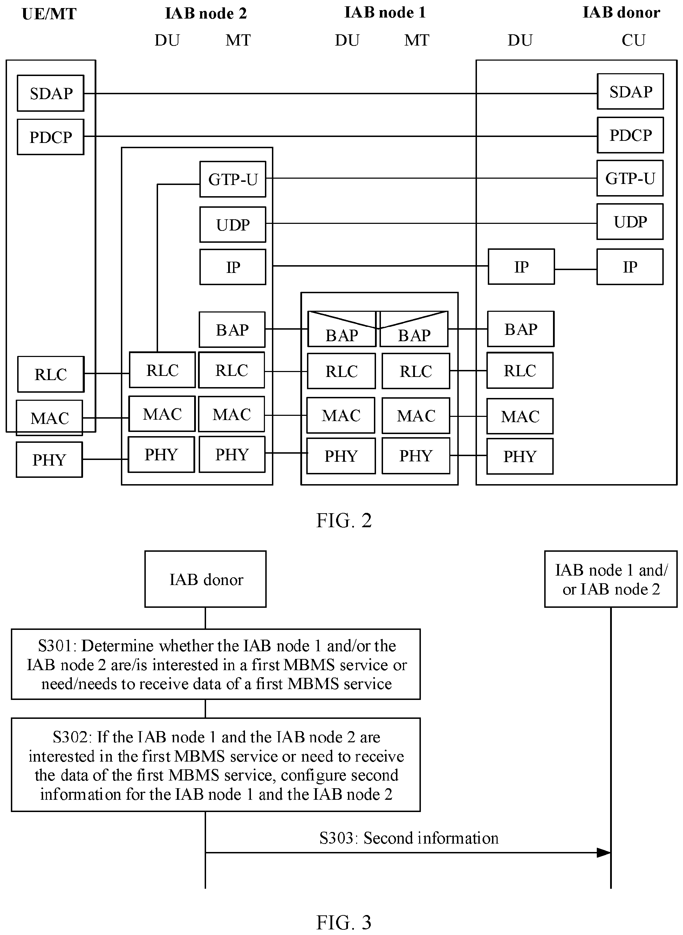

FIG. 2 is a schematic diagram of a structure of a user-plane protocol stack of a communication system according to an embodiment of this application. Refer to FIG. 2. In comparison with a common base station, a BAP entity (BAP layer) is newly added to an IAB base station. A main function of the BAP entity is a routing function. To be specific, after receiving a data packet, a BAP entity of an MT of an IAB node determines a next destination of the data packet. For example, the BAP entity of the MT transfers the data packet to a higher layer (including but not limited to an IP layer) of the IAB base station for processing, for example, performing IP screening and reading data packet information in an IP header. The higher layer sends, over an air interface, the processed data packet to a UE that accesses the IAB base station (which may be understood as a UE of the IAB base station). Alternatively, the BAP layer of the MT forwards the data packet to a peer BAP layer in a DU in the device for processing, and forwards the processed data packet to a next-hop IAB node, namely, a next IAB base station.

The BAP entity determines a destination of the data packet based on a BAP address and a PATH ID (path identifier) in a header of the data packet. The BAP address and the PATH ID are collectively referred to as a routing ID (routing identifier). Downlink data transmission is used as an example. When each IAB base station is established, an IAB donor base station allocates an address of the IAB base station, namely, a BAP address, to the IAB base station, and specifies, in backhaul routing information, a routing ID corresponding to a next-hop IAB base station of the IAB base station or a routing ID corresponding to the IAB donor base station. Optionally, the routing ID in the backhaul routing information may correspond to an egress link identifier (ID), and the data packet may be sent to the next-hop IAB base station by using the egress link ID.

Before the IAB donor base station sends data, the BAP entity adds a BAP address and a PATH ID to a BAP header. After receiving the data, the IAB base station compares the BAP address in the data with the BAP address allocated to the IAB base station. If the BAP address in the data is the same as the BAP address of the IAB base station, it indicates that the data is sent to the IAB base station. Therefore, the IAB base station delivers the data to an upper layer (for example, an IP layer) for processing, and sends the processed data to the UE of the IAB base station. If the BAP address in the data packet is different from the BAP address of the IAB base station, it indicates that the data is not sent to the IAB base station. In this case, the IAB base station sends the data packet to the next-hop IAB base station or the IAB donor base station based on the BAP address and the PATH ID in the data packet, or discards the data packet. The same rule applies to other IAB base stations.

In this embodiment of this application, in the communication system having a relay function, for example, an integrated access and backhaul (integrated access and backhaul, IAB) system, current data transmission is mainly for a unicast service. To be specific, data of a unicast transmission service is sent to only one terminal device. However, if a multimedia broadcast multicast service (multimedia broadcast multicast service, MBMS) service is introduced to subsequent 5G communication, because the MBMS service needs to be simultaneously sent to a plurality of terminal devices, transmission of the MBMS service cannot be completed in the current manner of processing the unicast service in the relay communication system. Therefore, how to transmit the MBMS service in the relay communication system is an urgent problem to be resolved.

To resolve the foregoing problem, an embodiment of this application provides a data transmission method. The method may be applied to the foregoing communication system. The following describes the data transmission method in detail with reference to the IAB system in the foregoing two-hop backhaul scenario.

First, it should be noted that: A first network device may be the 1^{st} relay node, for example, the IAB node 1, connected to the IAB donor in the IAB system; may be another relay node (for example, an IAB node i, where i is a positive integer greater than 1) in the IAB system; or may be an IAB node n, namely, an edge node, connected to the UE in the IAB system. A second network device may be a next-hop network device of the first network device in the IAB system, where for example, the first network device is the IAB node 1, and the second network device is the IAB node 2; or may be another relay node, for example, a next-hop node of the IAB node i, in the IAB system. This is not specifically limited. In this embodiment of this application, an example in which the first network device is the IAB node 1, and the second network device is the IAB node 2 is used. A third network device may be the IAB donor in the IAB system.

FIG. 3 is a schematic flowchart of a configuration method according to an embodiment of this application. Refer to FIG. 3. The method may include the following steps.

S301: An IAB donor determines whether an IAB node 1 and/or an IAB node 2 are/is interested in a first MBMS service or need/needs to receive data of a first MBMS service.

Herein, the MBMS service is a service oriented to a plurality of UEs, for example, a live broadcast service, a part of a public safety service, or a batch software update service.

In some possible implementations, if an IAB node is interested in the first MBMS service or needs to receive the data of the first MBMS service, the IAB node may actively report first service information to an IAB donor CU, to notify the IAB donor CU that the IAB node is interested in the first MBMS service or needs to receive the data of the first MBMS service. Certainly, when sending the first service information, the IAB node may alternatively notify the IAB donor CU that the IAB node is interested in another MBMS service or needs to receive data of another MBMS service. In other words, the IAB node may report preference of the IAB node for MBMS services to the IAB donor CU at a time, or may report preference for one MBMS service to the IAB donor CU each time. This is not specifically limited in this embodiment of this application.

It should be noted that, in an implementation, that the IAB node reports information to the IAB donor herein may be that a terminal device that accesses the IAB node reports information to the IAB donor, and the reported information is sent to the IAB donor through the IAB node. That the IAB node is interested in the first MBMS service or needs to receive the data of the first MBMS service may be that the terminal device that accesses the IAB node is interested in the first MBMS service or needs to receive the data of the first MBMS service. That is, the reporting process may be initiated by the IAB node or a UE that accesses the IAB node.

In another implementation, the IAB donor CU may alternatively deliver a report request (for example, by using a counting (counting) mechanism) to the IAB node, to request the IAB node to report the first service information. After receiving the report request, the IAB node reports the first service information to the IAB donor. As described above, herein, the IAB donor CU may alternatively deliver the report request to the UE that accesses the IAB node.

Therefore, after receiving a service indication reported by the IAB node, the IAB donor may determine that the IAB node or the UE that accesses the IAB node is interested in the first MBMS service or needs to receive the data of the first MBMS service.

In some possible implementations, when establishing or modifying a PDU session or a quality of service (quality of service, QoS) flow, a core network device may send second service information to the IAB donor CU, to notify the IAB donor CU that the PDU session or the QoS flow is used to transmit an MBMS service. In this case, the IAB donor CU may determine that an IAB node or a UE corresponding to the PDU session or the QoS flow is interested in the MBMS service or needs to receive data of the MBMS service. For an uplink service, the core network device may receive a service establishment request of the UE, to determine that the UE needs to receive the MBMS service. For a downlink service, the core network device may determine whether the downlink service is the MBMS service, and determine, based on address information of the UE or a UE ID, UEs to which the MBMS service is sent.

Further, the second service information delivered by the core network device may indicate a specific MBMS service transmitted by using the PDU session or the QoS flow. For example, the PDU session or the QoS flow is used to transmit the first MBMS service.

According to the foregoing method, the IAB donor may determine whether the IAB node 1 and the IAB node 2 or the UEs that access the IAB node 1 and the IAB node 2 are interested in the first MBMS service or need to receive the data of the first MBMS service.

S302: If the IAB node 1 and the IAB node 2 or the UEs that access the IAB node 1 and the IAB node 2 are interested in the first MBMS service or need to receive the data of the first MBMS service, the IAB donor configures second information for the IAB node 1 and the IAB node 2.

Herein, the second information may include a routing address and/or a service identifier of a second MBMS service. The routing address may include a BAP address allocated by the IAB donor to the IAB node or a first address that is allocated by the IAB donor to the IAB node and that indicates the IAB node. This is not specifically limited.

In some possible embodiments, the routing address may correspond to the first MBMS service. In other words, for different MBMS services, the IAB donor may configure different routing addresses for the MBMS services based on requirements of the IAB node for the MBMS services, so that the IAB node can use different processing policies for data packets of the different MBMS services. Alternatively, the routing address may not be associated with the first MBMS service, and is merely an address configured by the IAB donor to indicate the IAB node. The data of the first MBMS service can be sent to the IAB node based on the routing address. This is not specifically limited.

In this embodiment of this application, the IAB node or the UE that accesses the IAB node may report indications of interest in a plurality of MBMS services. Therefore, the IAB donor may configure a plurality of routing addresses for the IAB node, where the plurality of routing addresses correspond to different MBMS services; or the IAB donor may configure one routing address for the IAB node, where the routing address corresponds to the plurality of MBMS services.

S303: The IAB donor sends the second information to a corresponding IAB node.

After configuring the corresponding second information for the IAB node in S301 and S302, the IAB donor sends the second information to the corresponding IAB node by using F1 interface control signaling or radio resource control (radio resource control, RRC) signaling.

In this way, the IAB donor completes the process of configuring the IAB node.

In the foregoing configuration process, the IAB donor CU configures the IAB node, and sends the configured second information to the IAB node.

Next, the foregoing IAB system performs data transmission. The following uses downlink transmission as an example for description. A process of uplink transmission is similar to that of downlink transmission.

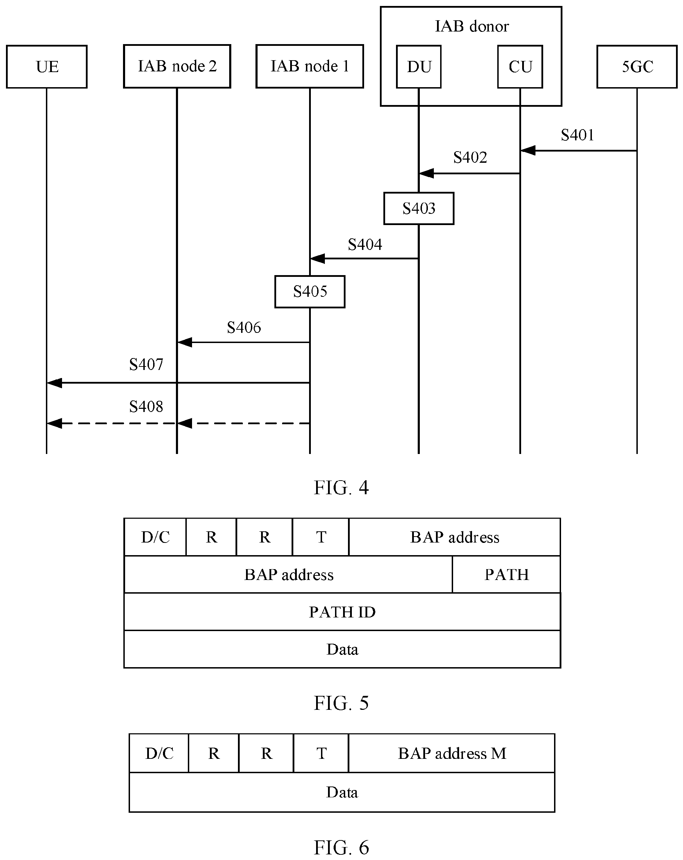

FIG. 4 is a first schematic flowchart of a data transmission method according to an embodiment of this application. Refer to a solid line in FIG. 4. The method may include the following steps.

S401: An IAB donor CU receives a first data packet from a core network.

The first data packet is a data packet of a first MBMS service.

In this embodiment of this application, the core network configures corresponding indication information for each MBMS service. The indication information may include at least one of the following: an IPv6 flow label, a differentiated services code point (differentiated services code point, DSCP) identifier, a destination IP address, and a service identifier of the MBMS service. Certainly, the indication information may alternatively include other information. This is not specifically limited. The indication information may be included in a data packet or carried in separate control signaling.

Further, the destination IP address may be a multicast IP address, namely, a same IP address allocated to a plurality of IAB nodes. The multicast IP address may be used to send and receive the MBMS service.

S402: The IAB donor CU sends the first data packet to an IAB donor DU.

Herein, when the IAB donor CU performs S402, the indication information may be carried in a header of the first data packet, and sent to the IAB donor DU. Certainly, the indication information may alternatively be sent by the IAB donor CU to the IAB donor DU by using independent control signaling, for example, FI interface signaling. Certainly, the indication information may alternatively be sent in another manner. This is not specifically limited in this embodiment of this application.

S403: The IAB donor DU configures first information for the first data packet.

In some possible implementations, the IAB donor CU may send, to the IAB donor DU in advance, a mapping relationship between indication information corresponding to different MBMS services and routing information. In other words, the IAB donor CU allocates fifth information to the different MBMS services, where the fifth information may include a routing address (for example, a BAP address or a first address) and/or a service identifier of an MBMS service, and the first address is an address that is allocated by the IAB donor CU to an IAB node 1 and that indicates only the IAB node 1.

In this case, after receiving the first data packet, the IAB donor DU may determine the first information based on the first data packet or first indication information corresponding to the first MBMS service (where the first indication information is indication information corresponding to the first MBMS service) and the mapping relationship, and add the first information to the header (for example, a BAP header) of the first data packet. Specifically, the IAB donor DU performs query based on the mapping relationship, to find the first information corresponding to the first indication information, and then adds the first information to the header of the first data packet.

In some possible implementations, the first information may include a routing address (for example, a BAP address or a second address) of the first MBMS service and/or a service identifier of the first MBMS service.

S404: The IAB donor DU sends the first data packet that carries the first information to the IAB node 1.

The IAB donor CU may configure a mapping relationship between routing information and a next-hop IAB node for the IAB donor DU. The mapping relationship is used by the IAB donor DU to determine the next-hop IAB node. After determining the first information, the IAB donor DU may determine the next-hop IAB node based on the first information and the mapping relationship. The next-hop IAB node continues to search for a next-hop IAB node based on the routing information configured by the IAB donor CU. The same rule applies to other next-hop IAB nodes. After passing through several IAB nodes, the first data packet carrying the first information arrives at the IAB node 1.

S405: The IAB node 1 determines whether the first information carried in the first data packet matches second information of the IAB node 1. If the first information matches the second information, the IAB node 1 performs S406; or if the first information does not match the second information, the IAB node 1 performs S407.

The IAB node 1 compares the first information in the first data packet with the second information of the IAB node 1, and determines whether the first information matches the second information. For example, the IAB node 1 compares the BAP address in the first data packet with a BAP address configured by the IAB donor for the IAB node 1, to determine whether the two BAP addresses match. Certainly, this may also be understood as determining whether the BAP address in the first data packet is consistent with the BAP address configured by the IAB donor for the IAB node 1. If the two BAP addresses match (are consistent), the IAB node 1 performs S406; or if the two BAP addresses do not match (are not consistent), the IAB node 1 performs S407. Alternatively, the IAB node 1 may compare the service identifier of the first MBMS service in the first data packet with a service identifier of a second MBMS service configured by the IAB donor for the IAB node 1, to determine whether the two service identifiers match. If the two service identifiers match (are consistent), the IAB node 1 performs S406; or if the two service identifiers do not match (are not consistent), the IAB node 1 performs S407.

S406: The IAB node 1 sends the first data packet to at least one UE that accesses the IAB node 1.

In S401 to S407, steps performed by the IAB node 1 may be performed by a BAP entity (BAP layer) in the IAB node 1. In this case, in S406, the BAP entity of the IAB node 1 removes the BAP header of the first data packet, and transmits the first data packet to a higher layer of the IAB node 1, for example, an IP layer, for further processing, for example, performing IP screening and reading data packet information in an IP header. Then, the higher layer sends, in unicast or multicast mode, the first data packet to the UE that accesses the IAB node 1.

In some possible implementations, because a data packet of a same MBMS service is sent to a plurality of IAB nodes, an IP address in the data packet may not match an IP address of a part of the IAB nodes. In this case, the data packet is likely to be discarded at the IP layer. To prevent the data packet from being discarded by the IAB node, when performing S406, the BAP entity may indicate the IP layer not to perform first processing on the first data packet, so that the IP layer ignores a difference between the IP addresses. Therefore, the IAB node can send the first data packet to the UE, instead of discarding the first data packet due to mismatch of the IP addresses.

In this embodiment of this application, the first processing may include screening the first data packet based on the IP address carried in the first data packet or discarding the first data packet. In other words, the BAP entity may send second indication information to the IP layer, where the second indication information may indicate the IP layer not to perform IP address screening on the first data packet or not to discard the first data packet.

Certainly, in another embodiment of this application, in the foregoing configuration process, the IAB donor may alternatively configure at least one IP address for the IAB node. In this case, when S406 is performed, if the IP address of the first data packet does not match the at least one IP address, the IAB node may modify the IP address of the first data packet to a first IP address in the at least one IP address. In this way, when the IP layer performs processing, because the IP addresses match, the IP layer does not discard the first data packet.

In a specific implementation process, the BAP entity may alternatively use another manner to prevent the first data packet from being discarded by the IAB node 1. This is not specifically limited.

In some possible implementations, in the foregoing configuration process, the IAB donor may alternatively configure, for the IAB node 1, one or more multicast IP addresses (fourth information) corresponding to the MBMS service. In this case, the BAP entity of the IAB node 1 may send the first data packet to the IP layer. The IP layer screens a destination IP address (multicast IP address) carried in the first data packet and the one or more multicast IP addresses configured for the IAB node 1. If matched multicast IP addresses exist, the IP layer considers that the first data packet is a data packet that the IP layer needs to receive, and sends the first data packet to the UE; or if matched multicast IP addresses do not exist, the IP layer considers that the first data packet is not a data packet that the IP layer needs to receive, and may discard the first data packet.

S407: The IAB node 1 sends the first data packet to N next-hop IAB nodes (namely, IAB nodes 2).

Herein, after determining, in S405, that the first information does not match the second information, the IAB node 1 may determine that the first data packet is not a data packet sent to the IAB node 1 or the UE that accesses the IAB node 1. In this case, the IAB node 1 needs to forward the first data packet to the next-hop IAB nodes, instead of sending the first data packet to the UE that accesses the IAB node 1.

The IAB node 1 may be connected to the N IAB nodes 2, where N is a positive integer. In this case, after determining that the first data packet is not the data packet sent to the IAB node 1, the IAB node 1 forwards the first data packet to the next-hop IAB nodes. In this case, the IAB node 1 needs to first determine the next-hop IAB nodes. Because the IAB system is an IAB system in a two-hop backhaul scenario, the N IAB nodes 2 are all next-hop IAB nodes of the IAB node 1, and the IAB node 1 sends the first data packet to the N IAB nodes 2.

Further, to ensure effective data transmission, when determining the next-hop IAB nodes, the IAB node 1 may select N available IAB nodes in all the next-hop IAB nodes of the IAB node 1. For example, the IAB node 1 is connected to M IAB nodes 2, where M is a positive integer greater than N. The IAB node 1 may determine N available IAB nodes 2 in the M IAB nodes 2 as the next-hop IAB nodes. On the contrary, if all the next-hop IAB nodes of the IAB node 1 are unavailable, the IAB node 1 discards the first data packet.

It should be noted that "available" means reachable. To be specific, if an IAB node is available, it indicates that the IAB node can complete normal transmission. On the contrary, if an IAB node is unavailable, it indicates that the IAB node may fail to meet a transmission requirement due to reasons such as poor radio link quality, a radio link disconnection, or a radio link failure.

In this embodiment of this application, after determining, in S405, that the first information does not match the second information, the IAB node 1 may further determine whether there is a next-hop IAB node of the IAB node 1. If there is no next-hop IAB node of the IAB node 1, the IAB node 1 may be an edge node or a last node in the IAB system. In this case, the IAB node 1 may discard the first data packet.

In some possible embodiments, S407 may further include: The IAB node 1 determines the N next-hop IAB nodes (IAB nodes 2) based on the first information.

After determining to forward the first data packet to the next-hop IAB nodes, the IAB node 1 may further determine, as the next-hop IAB nodes based on the first information (for example, the BAP address) in the first data packet, N IAB nodes 2 that match the BAP address and that are in the IAB nodes 2 connected to the IAB node 1, and send the first data packet to the N IAB nodes 2.

Further, the first information may include a PATH ID. In this case, the IAB node 1 further determines the next-hop IAB nodes based on the PATH ID. The IAB node 1 may determine, as the next-hop IAB nodes, N IAB nodes 2 that match both the BAP address and the PATH ID in the first data packet and that are in the IAB nodes 2 connected to the IAB node 1, and send the first data packet to the N IAB nodes 2.

It should be noted that data packets in the foregoing communication system may be classified into two types: a unicast service data packet and a multicast service data packet, and the two types of service data packets use different data packet formats.

FIG. 5 is a schematic diagram of a BAP header format of a unicast service data packet according to an embodiment of this application. Refer to FIG. 5. R (reserved) is a reserved field. Because a format of the unicast service data packet is different from a format of the multicast service data packet, a T field (which may be referred to as a Type field) indicates whether the data packet is the unicast service data packet or the multicast service data packet. A BAP address field may also be referred to as a DESTINATION field, and indicates a BAP address corresponding to the data packet. A Data field is a payload (for example, an IP packet) corresponding to the data packet. A D/C field indicates whether the data packet is a control PDU or a data PDU. A PATH ID field may also be referred to as a PATH field, and indicates a PATH ID. FIG. 6 is a schematic diagram of a BAP header format of a multicast service data packet according to an embodiment of this application. Refer to FIG. 6. Different from a unicast service, when the data packet is the multicast service data packet, a BAP address field indicates a BAP address corresponding to a multicast service, and may be referred to as a BAP address M.

In this embodiment of this application, through implementation of S407, complexity of the entire configuration process and processing complexity of each IAB base station are reduced, a header format of an MBMS service data packet is simplified, and transmission overheads are reduced.

In some possible implementations, the IAB node 1 may further obtain third information, where the third information indicates a mapping relationship between a PATH ID and a next-hop IAB node. Further, the second information and the third information may jointly indicate a mapping relationship between a routing address and a PATH ID and a next-hop IAB node. In actual application, the third information may be configured by the IAB donor for the IAB node 1 in the foregoing configuration process, or may be preset or created by the IAB node. The IAB node 1 queries, based on the third information, N IAB nodes 2 that match both the routing address and at least one of PATH IDs in the first data packet, namely, the next-hop IAB nodes, and sends the first data packet to the N IAB nodes 2.

In a specific implementation process, the third information may include a routing address (for example, a BAP address) corresponding to an MBMS service, a PATH ID, and a routing address (for example, a BAP address) and a PATH ID of a next-hop IAB node. Alternatively, the third information may include a link identifier. The link identifier is an identifier of an egress link corresponding to a next-hop IAB node. The link identifier may be configured by the IAB donor for the IAB node 1, or may be created by the IAB node 1 based on a routing address (for example, a BAP address) corresponding to an MBMS service, a PATH ID, a routing address (for example, a BAP address) and a PATH ID of a next-hop IAB node, and the like that are configured by the IAB donor for the IAB node 1. Certainly, the link identifier may alternatively be obtained in another manner. This is not specifically limited.

It should be noted that, when the IAB donor configures the third information for the IAB node 1, data packets in the foregoing communication system may be classified into two types: a unicast service data packet and a multicast service data packet, and the two types of service data packets share a same data packet format. BAP headers of different multicast service data packets carry BAP addresses and/or PATH IDs corresponding to multicast services, and BAP headers of different unicast service data packets carry BAP addresses and/or PATH IDs corresponding to destination IAB nodes.

The BAP addresses corresponding to the IAB nodes are different on the IAB nodes, and each BAP address may correspond to a plurality of unicast services. A BAP address corresponding to a multicast service may be simultaneously configured for a plurality of different IAB nodes, and each BAP address corresponds to one or more multicast services.

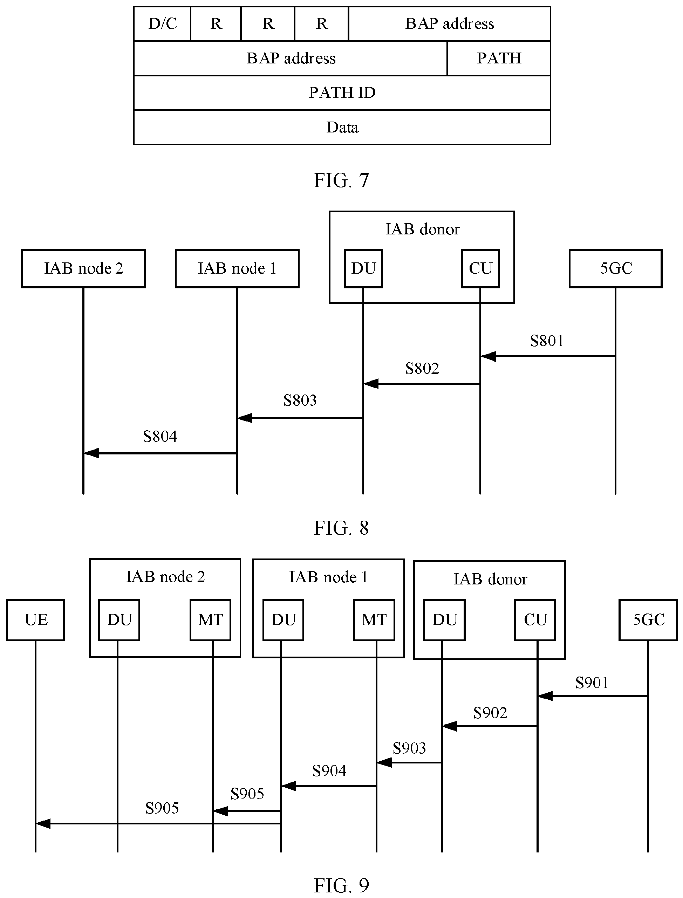

FIG. 7 is a schematic diagram of a BAP header format according to an embodiment of this application. Refer to FIG. 7. R (reserved) is a reserved field. A BAP address field may also be referred to as a DESTINATION field, and indicates a BAP address corresponding to the data packet. A Data field is a payload (for example, an IP packet) corresponding to the data packet. A D/C field indicates whether the data packet is a control PDU or a data PDU. A PATH ID field may also be referred to as a PATH field, and indicates a PATH ID.

In this embodiment of this application, because the IAB donor configures, for the IAB node 1, a public routing address (for example, the second information and the third information) corresponding to the MBMS service, an MBMS service data packet can be prevented from being transmitted along a redundant path, so that the entire transmission process is simple and efficient.

In this case, in S407, when searching for a next-hop IAB node, the IAB node 1 may further first query, based on the third information, whether there are N IAB nodes 2 (namely, next-hop IAB nodes) that match the routing address and at least one of PATH IDs. If there are N IAB nodes 2 that match the routing address and the at least one PATH ID, the IAB node 1 sends the first data packet to the N IAB nodes 2; or if there are no IAB node 2 that matches the routing address and the at least one PATH ID, the IAB node 1 queries whether there are N IAB nodes 2 that match the routing address. If there are N IAB nodes 2 that match the routing address, the IAB node 1 sends the first data packet to the N IAB nodes 2; or if there is neither an IAB node 2 that matches the routing address nor an IAB node 2 that matches the at least one PATH ID, the IAB node 1 may discard the first data packet or send the first data packet to all IAB nodes 2 connected to the IAB node 1, namely, all next-hop IAB nodes of the IAB node 1.

It should be noted that before sending the first data packet to the N IAB nodes 2, the IAB node 1 may further replicate the first data packet, to obtain N first data packets including the original first data packet (namely, the first data packet from the IAB donor). The N first data packets are the same as the original first data packet. Then, the IAB node 1 sends the N first data packets to the N IAB nodes 2. Certainly, the IAB node 1 may alternatively send the first data packet from the IAB donor to the N IAB nodes 2 through N times of sending.

In this way, the downlink MBMS service is transmitted in the IAB system.

Refer to a dashed line in FIG. 4. In this embodiment of this application, after determining, in S405, that the first information in the first data packet matches the second information of the IAB node 1, the IAB node 1 may further perform S408: The IAB node 1 sends the first data packet to at least one UE that accesses the IAB node 1 and the N IAB nodes 2.

It should be noted that the N IAB nodes 2 herein are consistent with the N IAB nodes 2 in the foregoing embodiment. Details are not described herein again.

When determining that the first information in the first data packet matches the second information of the IAB node 1, the IAB node 1 may send the first data packet to the N IAB nodes 2 and the UE that accesses the IAB node 1. Specifically, the IAB node 1 may replicate the first data packet, to obtain N+1 first data packets including the original first data packet (namely, the first data packet from the IAB donor). The N+1 first data packets are the same as the original first data packet. Then, the IAB node 1 sends one of the N+1 first data packets to the UE, and sends the other N first data packets to the N IAB nodes 2. Certainly, the IAB node 1 may alternatively send the first data packet from the IAB donor to the UE and the N IAB nodes 2 through N+1 times of sending.

In another embodiment of this application, FIG. 8 is a second schematic flowchart of a data transmission method according to an embodiment of this application. Refer to FIG. 8. The method may include the following steps.

S801: An IAB donor CU receives a first data packet from a core network.

S802: The IAB donor CU sends the first data packet to an IAB donor DU.

S803: The IAB donor DU sends the first data packet to an IAB node 1.

S804: The IAB node 1 sends the first data packet to N next-hop IAB nodes (namely, IAB nodes 2).

In S801 to S804, the IAB donor CU does not need to configure first information for the first data packet, but may directly send the first data packet to the IAB node 1, and the IAB node 1 forwards the first data packet to the N IAB nodes 2. In other words, the IAB node 1 does not need to match the first information in the first data packet with second information of the IAB node 1, but directly forwards the first data packet to the N IAB nodes 2.

In the embodiments shown in FIG. 4 and FIG. 8, the IAB donor does not need to additionally configure a BAP address for an MBMS service. In addition, the MBMS service is transmitted over an access link. This can reduce load of a backhaul link.

An embodiment of this application further provides a data transmission method. The method may be applied to the foregoing IAB system.

FIG. 9 is a third schematic flowchart of a data transmission method according to an embodiment of this application. Refer to FIG. 9. The method may include the following steps.

S901: An IAB donor CU receives a second data packet from a core network.

Herein, the second data packet is a data packet of a third MBMS service, and may be the same as or different from a first data packet.

S902: The IAB donor CU sends the second data packet to an IAB donor DU.

S903: The IAB donor DU sends the second data packet to an IAB node 1 MT in unicast or multicast mode.

S904: The IAB node 1 MT sends the first data packet to the IAB node 1 DU.

S905: The IAB node 1 DU sends the second data packet to a UE and/or an IAB node 2 MT in unicast or multicast mode.

S901 to S905 may be: An IAB donor or a previous-hop IAB node sends, in unicast or multicast mode, the second data packet of the third MBMS service to at least one UE that accesses the IAB donor or the previous-hop IAB node and a first-level IAB node (for example, the IAB node 1). After receiving the second data packet, the first-level IAB node may further send, in unicast or multicast mode, at least one UE that accesses the first-level IAB node and a second-level IAB base station (for example, the IAB node 2).

Specifically, after an IAB node receives the second data packet from a previous-level IAB node in unicast or multicast mode, the second data packet may be processed by a physical (PHY) layer and a media access control (MAC) layer in an IAB node MT, processed by a MAC layer and a PHY layer in an IAB node DU, and then sent out. Alternatively, the second data packet may be processed by a PHY layer, a MAC layer, and a radio link control (RLC) layer in an IAB node MT, processed by an RLC layer, a MAC layer, and a PHY layer in the IAB node DU, and then sent out. Certainly, the second data packet may alternatively be processed by PDCP layers in the two modules, and then sent out. The same rule applies to other IAB nodes. Details are not described again.

In this embodiment of this application, sending performed in multicast transmission mode in S905 means: When sending a TB corresponding to a PDU session, the IAB donor CU or the previous-hop IAB node DU scrambles, by using a G-RNTI, the PDU or DCI corresponding to the PDU, and one or more IAB node MTs or UEs receive the same PDU based on the same G-RNTI. Alternatively, the IAB donor CU or the IAB node DU notifies a plurality of IAB node MTs of a time domain or frequency domain location of a same PDU in a semi-persistent manner, and the plurality of IAB node MTs or UEs may simultaneously receive the PDU. Alternatively, the IAB donor CU or the IAB node DU transmits the PDU through a radio bearer established for multicast transmission or through a channel (for example, an MCCH/MTCH channel) specially designed for multicast.

Correspondingly, receiving performed in multicast mode in S903 means: When the IAB donor CU or the previous-hop IAB node DU performs sending in multicast mode, one of the plurality of IAB node MTs or UEs receives the PDU based on G-RNTI, or one of the plurality of IAB node MTs or UEs receives the PDU through the radio bearer established for multicast transmission or through the channel used for multicast transmission.

In some possible implementations, if the IAB node needs to receive the data packet of the MBMS service from the previous-level IAB node in multicast mode, the IAB donor needs to send, to the IAB node, configuration information that is used to receive multicast sent by the upper-level IAB node. In this embodiment of this application, the configuration information may include information such as a G-RNTI corresponding to the third MBMS service, time domain location information for receiving the second data packet, and frequency domain location information for receiving the second data packet, or may include information such as a physical channel, a transmission channel, and a logical channel for receiving the third MBMS service. This is not specifically limited in this embodiment of this application.

In actual application, the configuration information may be sent by the IAB donor to the IAB node by using F1 interface control signaling or RRC signaling.

In a possible implementation, the IAB node may further receive the second data packet from the previous-level IAB node in unicast mode, and then send the second data packet to a next-level IAB node in multicast mode. Alternatively, the IAB node may receive the second data packet from the previous-level IAB node in multicast mode, and then send the second data packet to a next-level IAB node in unicast mode. This is not specifically limited in this embodiment of this application.

In some possible implementations, in the embodiments shown in FIG. 4 to FIG. 8, the data packet of the MBMS service is sent over the backhaul link. In essence, in the embodiment shown in FIG. 9, the data packet of the MBMS service is sent over the access link. The two sending manners may be performed independently, that is, either of the two sending manners is selected, or the IAB donor may indicate a manner in which the IAB node transmits the data packet of the MBMS service.

In the embodiment shown in FIG. 9 of this application, the IAB donor does not need to additionally configure a BAP address for an MBMS service. In addition, the MBMS service is transmitted over the access link. This can reduce load of the backhaul link.

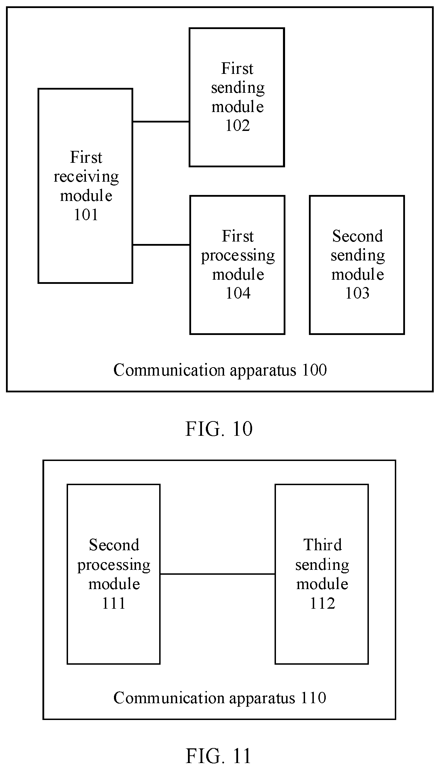

Based on a same inventive concept, an embodiment of this application provides a communication apparatus. The communication apparatus may be a data transmission apparatus, a chip or a system-on-a-chip in the data transmission apparatus, or a functional module that is in the data transmission apparatus and that is configured to implement the method performed by the IAB node 1 in the foregoing embodiment. The function may be implemented by hardware executing corresponding software. The hardware or the software includes one or more modules corresponding to the function. For example, FIG. 10 is a first schematic diagram of a structure of a communication apparatus according to an embodiment of this application. Refer to FIG. 10. The communication apparatus 100 may include: a first receiving module 101, configured to receive a first data packet, where the first data packet is a data packet of a first MBMS service, and the first data packet carries first information; and a first sending module 102, configured to: if second information of a first network device matches the first information, send the first data packet to a terminal device that accesses the first network device, where the second information is preconfigured for the first network device.

In some possible implementations, the first sending module is further configured to: if the second information of the first network device matches the first information, send the first data packet to N second network devices, where N is a positive integer.

In some possible implementations, the first sending module is further configured to: obtain N+1 first data packets based on the first data packet; and send the N+1 first data packets to the terminal device and the N second network devices.

Still refer to FIG. 10. In some possible implementations, the apparatus further includes a second sending module 103, configured to: if second information of the first network device does not match the first information, send the first data packet to N second network devices, where N is a positive integer.

In some possible implementations, the second sending module is further configured to: obtain N first data packets based on the first data packet; and send the N first data packets to the N second network devices.

In some possible implementations, the second sending module is further configured to: if the second information of the first network device does not match the first information, and a next-hop network device of the first network device is unavailable, discard the first data packet.

In some possible implementations, the N second network devices are all next-hop network devices of the first network device.

In some possible implementations, the first information includes a routing address corresponding to the first MBMS service and/or a service identifier corresponding to the first MBMS service. The second information includes a routing address configured for the first network device and/or a service identifier of a second MBMS service.

Still refer to FIG. 10. In some possible implementations, the apparatus further includes: a first processing module 104, configured to determine the N second network devices based on the first information. Alternatively, the first information further includes a path identifier (PATH ID). The first processing module is further configured to determine the N second network devices based on the path identifier.

In some possible implementations, the first processing module is further configured to: obtain, by the first network device, third information, where the third information indicates a mapping relationship between a path identifier and a second network device; and determine the N second network devices based on the path identifier and the third information.

In some possible implementations, the first sending module is specifically configured to: before sending the first data packet to the terminal device, indicate an IP layer not to perform first processing on the first data packet, where the first processing includes screening the first data packet based on an IP address carried in the first data packet or discarding the first data packet; or modify an IP address of the first data packet to a first IP address, where the first IP address is an IP address preconfigured for the first network device.

In some possible implementations, the first sending module is further configured to: obtain fourth information, where the fourth information includes a multicast IP address configured for the first network device; and send the first data packet to the terminal device based on the multicast IP address.

Based on a same inventive concept, an embodiment of this application provides a communication apparatus. The communication apparatus may be a data transmission apparatus, a chip or a system-on-a-chip in the data transmission apparatus, or a functional module that is in the data transmission apparatus and that is configured to implement the method performed by the IAB donor in the foregoing embodiment. The function may be implemented by hardware executing corresponding software. The hardware or the software includes one or more modules corresponding to the function. For example, FIG. 11 is a second schematic diagram of a structure of a communication apparatus according to an embodiment of this application. Refer to FIG. 11. The communication apparatus 110 includes: a second processing module 111, configured to configure corresponding first information for a first data packet of a first MBMS service; and a third sending module 112, configured to send the first data packet to a first network device, where the first data packet carries the first information, and the first information triggers the first network device to perform at least one of the following operations: sending the first data packet to a terminal device that accesses the first network device, sending the first data packet to N second network devices, and discarding the first data packet.

In some possible implementations, the second processing module is further configured to configure second information for the first network device, where the second information corresponds to a second MBMS service.

In some possible implementations, the second information includes a routing address configured for the first network device and/or a service identifier of the second MBMS service.

In some possible implementations, the first information includes a routing address corresponding to the first MBMS service and/or a service identifier corresponding to the first MBMS service.

In some possible implementations, the first information further includes a path identifier corresponding to the first MBMS service. The second processing module is further configured to configure third information for the first network device, where the third information indicates a mapping relationship between a path identifier and a second network device.

In some possible implementations, the second processing module is further configured to configure fourth information for the first network device, where the fourth information includes a multicast IP address corresponding to the first MBMS service, and the multicast IP address indicates the first network device to send the first data packet to the terminal device.

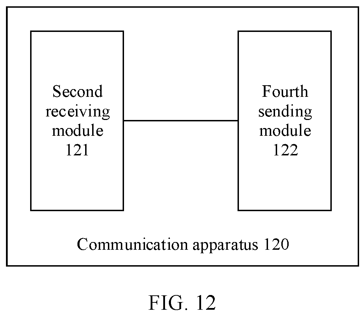

Based on a same inventive concept, an embodiment of this application provides a communication apparatus. The communication apparatus may be a data transmission apparatus, a chip or a system-on-a-chip in the data transmission apparatus, or a functional module that is in the data transmission apparatus and that is configured to implement the method performed by the IAB node 1 in the foregoing embodiment. The function may be implemented by hardware executing corresponding software. The hardware or the software includes one or more modules corresponding to the function. For example, FIG. 12 is a third schematic diagram of a structure of a communication device according to an embodiment of this application. Refer to FIG. 12. The communication apparatus 120 includes: a second receiving module 121, configured to receive, in unicast or multicast mode, a second data packet sent by a fourth network device, where the second data packet is a data packet of a third multimedia broadcast multicast service MBMS service; and a fourth sending module 122, configured to send, in unicast or multicast mode, the second data packet to a second network device and/or a terminal device that accesses the first network device.

In some possible implementations, the fourth sending module is specifically configured to: obtain configuration information corresponding to the second data packet; and receive the second data packet based on the configuration information.

In some possible implementations, the configuration information includes at least one of the following: a G-RNTI corresponding to the third MBMS service, time domain location information for receiving the second data packet, and frequency domain location information for receiving the second data packet.

Based on a same inventive concept, an embodiment of this application provides a network device. The network device includes a processor and a memory. The processor is coupled to the memory. The processor is configured to read and execute instructions in the memory, to implement the data transmission method according to the first aspect.

Based on a same inventive concept, an embodiment of this application, which is not claimed, provides a computer-readable storage medium. The computer-readable storage medium stores instructions. When the instructions are run on a computer, the instructions are used to perform the data transmission method according to the first aspect

Based on a same inventive concept, an embodiment of this application, which is not claimed, provides a computer program or a computer program product. When the computer program or the computer program product is executed on a computer, the computer is enabled to implement the data transmission method according to the first aspect.

A person skilled in the art can understand that functions described with reference to various illustrative logical blocks, modules, and algorithm steps disclosed in this specification may be implemented by using hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or a communication medium that includes any medium that facilitates transmission of a computer program from one place to another (for example, according to a communication protocol). In this manner, the computer-readable medium may generally correspond to: (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of example, and not limitation, such computer-readable storage media may include a RAM, a ROM, an EEPROM, a CD-ROM or another optical disc storage apparatus, a magnetic disk storage apparatus or another magnetic storage apparatus, a flash memory, or any other medium that can store required program code in a form of instructions or a data structure and that can be accessed by a computer. In addition, any connection is properly referred to as a computer-readable medium. For example, if instructions are transmitted from a website, a server, or another remote source through a coaxial cable, an optical fiber, a twisted pair, a digital subscriber line (DSL), or wireless technologies such as infrared, radio, and microwave, the coaxial cable, the optical fiber, the twisted pair, the DSL, or the wireless technologies such as infrared, radio, and microwave are included in a definition of the medium. However, it should be understood that the computer-readable storage medium and the data storage medium do not include connections, carriers, signals, or other transitory media, but actually mean non-transitory tangible storage media. Disks and optical discs used in this specification include a compact disc (CD), a laser disc, an optical disc, a digital versatile disc (DVD), and a Blu-ray disc. The disks usually reproduce data magnetically, and the optical discs reproduce data optically by using lasers. A combination of the foregoing items should also be included in the scope of the computer-readable medium.

The instructions may be executed by one or more processors such as one or more digital signal processors (DSP), a general microprocessor, an application-specific integrated circuit (ASIC), a field programmable gate array (FPGA), or other equivalent integrated or discrete logic circuits. Therefore, the term "processor" used in this specification may refer to any one of the foregoing structures or any other structure applicable to implementation of the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be completely implemented in one or more circuits or logic elements.

The technologies in this application may be implemented in various apparatuses or devices, including a wireless handset, an integrated circuit (IC), or a set of ICs (for example, a chip set). Various components, modules, or units are described in this application to emphasize functional aspects of the apparatuses configured to perform the disclosed technologies, but are not necessarily implemented by different hardware units. Actually, as described above, various units may be combined into a codec hardware unit in combination with appropriate software and/or firmware, or may be provided by interoperable hardware units (including the one or more processors described above).

In the foregoing embodiments, descriptions of each embodiment have respective focuses. For a part that is not described in detail in an embodiment, refer to related descriptions in other embodiments.

## Claims

1. A data transmission method performed by a first network device, wherein the first network device is an integrated access and backhaul, IAB, node in an IAB system, the method comprising:
receiving, by the first network device, a first data packet, wherein the first data packet is a data packet of a first multimedia broadcast multicast service, MBMS, and the first data packet carries first information corresponding to the first MBMS service,
wherein the first information is configured by an IAB donor in the IAB system; and
if (S405) second information of the first network device matches the first information, sending (S406), by the first network device, the first data packet to a terminal device that accesses the first network device, wherein the second information is preconfigured for the first network device by the IAB donor,
wherein the method further comprises:
if second information of the first network device does not match the first information, sending (S407), by the first network device, the first data packet to N second network devices, wherein N is a positive integer.

2. The method according to claim 1, wherein if the second information of the first network device matches the first information, the method further comprises:
sending, by the first network device, the first data packet to N second network devices, wherein N is a positive integer.

3. The method according to claim 2, wherein the method further comprises:
obtaining, by the first network device, N+1 first data packets based on the first data packet; and
sending, by the first network device, the N+1 first data packets to the terminal device and the N second network devices.

4. The method according any one of claims 1 to 3, wherein the sending, by the first network device, the first data packet to N second network devices comprises:
obtaining, by the first network device, N first data packets based on the first data packet; and
sending, by the first network device, the N first data packets to the N second network devices.

5. The method according to any one of claims 1 to 4, wherein if the second information of the first network device does not match the first information, the method further comprises:
if a next-hop network device of the first network device is unavailable, discarding, by the first network device, the first data packet.

6. The method according to any one of claims 1 to 5, wherein the N second network devices are all next-hop network devices of the first network device.

7. The method according to any one of claims 1 to 6, wherein the first information comprises a routing address corresponding to the first MBMS service and/or a service identifier of the first MBMS service; and
the second information comprises a routing address configured for the first network device and/or a service identifier of a second MBMS service.

8. A network device (100), comprising a processor (104) and a memory, wherein the processor is coupled to the memory; and the processor is configured to read and execute instructions in the memory, to implement the data transmission method according to claims 1 to 7.

## Patentansprüche

1. Datenübertragungsverfahren, das von einer ersten Netzwerkvorrichtung durchgeführt wird, wobei die erste Netzwerkvorrichtung ein Knoten mit integriertem Zugriff und Backhaul (IAB) in einem IAB-System ist, wobei das Verfahren Folgendes umfasst:
Empfangen eines ersten Datenpakets durch die erste Netzwerkvorrichtung, wobei das erste Datenpaket ein Datenpaket eines ersten Multimedia-Broadcast-Multicast-Dienstes (MBMS) ist und das erste Datenpaket erste Informationen trägt, die dem ersten MBMS-Dienst entsprechen,
wobei die ersten Informationen von einem IAB-Spender in dem IAB-System konfiguriert sind; und,
wenn (S405) die zweiten Informationen der ersten Netzwerkvorrichtung mit den ersten Informationen übereinstimmen, Senden (S406) des ersten Datenpakets durch die erste Netzwerkvorrichtung an eine Endgerätevorrichtung, die auf die erste Netzwerkvorrichtung zugreift, wobei die zweiten Informationen von dem IAB-Spender für die erste Netzwerkvorrichtung vorkonfiguriert sind,
wobei das Verfahren ferner Folgendes umfasst:
wenn die zweiten Informationen der ersten Netzwerkvorrichtung nicht mit den ersten Informationen übereinstimmen, Senden (S407) des ersten Datenpakets durch die erste Netzwerkvorrichtung an N zweite Netzwerkvorrichtungen, wobei N eine positive ganze Zahl ist.

2. Verfahren nach Anspruch 1, wobei das Verfahren, wenn die zweiten Informationen der ersten Netzwerkvorrichtung mit den ersten Informationen übereinstimmen, ferner Folgendes umfasst: Senden des ersten Datenpakets durch die erste Netzvorrichtung an N zweite Netzvorrichtungen, wobei N eine positive ganze Zahl ist.

3. Verfahren nach Anspruch 2, wobei das Verfahren ferner Folgendes umfasst:
Erlangen von N+1 ersten Datenpaketen durch die erste Netzwerkvorrichtung basierend auf dem ersten Datenpaket; und
Senden der N+1 ersten Datenpakete durch die erste Netzwerkvorrichtung an die Endgerätevorrichtung und die N zweiten Netzwerkvorrichtungen.

4. Verfahren nach einem der Ansprüche 1 bis 3, wobei das Senden des ersten Datenpakets durch die erste Netzwerkvorrichtung an N zweite Netzwerkvorrichtungen Folgendes umfasst:
Erlangen von N ersten Datenpaketen durch die erste Netzwerkvorrichtung basierend auf dem ersten Datenpaket; und
Senden der N ersten Datenpakete durch die erste Netzwerkvorrichtung an die N zweiten Netzwerkvorrichtungen.

5. Verfahren nach einem der Ansprüche 1 bis 4, wobei das Verfahren, wenn die zweiten Informationen der ersten Netzwerkvorrichtung nicht mit den ersten Informationen übereinstimmen, ferner Folgendes umfasst:
wenn eine Next-Hop-Netzwerkvorrichtung der ersten Netzwerkvorrichtung nicht verfügbar ist, Verwerfen des ersten Datenpakets durch die erste Netzwerkvorrichtung.

6. Verfahren nach einem der Ansprüche 1 bis 5, wobei die N zweiten Netzwerkvorrichtungen alle Next-Hop-Netzwerkvorrichtungen der ersten Netzwerkvorrichtung sind.

7. Verfahren nach einem der Ansprüche 1 bis 6, wobei die ersten Informationen eine Routing-Adresse, die dem ersten MBMS-Dienst entspricht, und/oder eine Dienstkennung des ersten MBMS-Dienstes umfassen; und
die zweiten Informationen eine für die erste Netzwerkvorrichtung konfigurierte Routing-Adresse und/oder eine Dienstkennung eines zweiten MBMS-Dienstes umfassen.

8. Netzwerkvorrichtung (100), umfassend einen Prozessor (104) und einen Speicher, wobei der Prozessor mit dem Speicher gekoppelt ist; und der Prozessor konfiguriert ist, um Anweisungen in dem Speicher zu lesen und auszuführen, um das Datenübertragungsverfahren nach den Ansprüchen 1 bis 7 zu implementieren.

## Revendications

1. Procédé de transmission de données réalisé par un premier dispositif réseau, dans lequel le premier dispositif réseau est un nœud de liaison terrestre à accès intégré, IAB, dans un système IAB, le procédé comprenant :
la réception, par le premier dispositif réseau, d'un premier paquet de données, dans lequel le premier paquet de données est un paquet de données d'un premier service de diffusion-multidiffusion multimédia, MBMS, et le premier paquet de données transporte des premières informations correspondant au premier service MBMS,
dans lequel les premières informations sont configurées par un donneur IAB dans le système IAB ; et
si (S405) des secondes information du premier dispositif réseau correspondent aux premières informations, l'envoi (S406), par le premier dispositif réseau, du premier paquet de données à un dispositif terminal qui accède au premier dispositif réseau, dans lequel les secondes informations sont préconfigurées pour le premier dispositif réseau par le donneur IAB,
dans lequel le procédé comprend également :
si des secondes informations du premier dispositif réseau ne correspondent pas aux premières informations, l'envoi (S407), par le premier dispositif réseau, du premier paquet de données à N seconds dispositifs réseau, dans lequel N est un entier positif.

2. Procédé selon la revendication 1, dans lequel si les secondes informations du premier dispositif réseau correspondent aux premières informations, le procédé comprend également :
l'envoi, par le premier dispositif réseau, du premier paquet de données à N seconds dispositifs réseau, dans lequel N est un entier positif.

3. Procédé selon la revendication 2, dans lequel le procédé comprend également :
l'obtention, par le premier dispositif réseau, de N+1 premiers paquets de données basés sur le premier paquet de données ; et
l'envoi, par le premier dispositif réseau, des N+1 premiers paquets de données au dispositif terminal et aux N seconds dispositifs réseau.

4. Procédé selon l'une quelconque des revendications 1 à 3, dans lequel l'envoi, par le premier dispositif réseau, du premier paquet de données à N seconds dispositifs réseau comprend :
l'obtention, par le premier dispositif réseau, de N premiers paquets de données basés sur le premier paquet de données ; et
l'envoi, par le premier dispositif réseau, des N premiers paquets de données aux N seconds dispositifs réseau.

5. Procédé selon l'une quelconque des revendications 1 à 4, dans lequel si les secondes informations du premier dispositif réseau ne correspondent pas aux premières informations, le procédé comprend également :
si un dispositif réseau de saut suivant du premier dispositif réseau est indisponible, le rejet, par le premier dispositif réseau, du premier paquet de données.

6. Procédé selon l'une quelconque des revendications 1 à 5, dans lequel les N seconds dispositifs réseau sont tous des dispositifs réseau de saut suivant du premier dispositif réseau.

7. Procédé selon l'une quelconque des revendications 1 à 6, dans lequel les premières informations comprennent une adresse de routage correspondant au premier service MBMS et/ou un identifiant de service du premier service MBMS ; et
les secondes informations comprennent une adresse de routage configurée pour le premier dispositif réseau et/ou un identifiant de service d'un second service MBMS.

8. Dispositif réseau (100), comprenant un processeur (104) et une mémoire, dans lequel le processeur est couplé à la mémoire, et le processeur est configuré pour lire et exécuter des instructions dans la mémoire, pour mettre en œuvre le procédé de transmission de données selon les revendications 1 à 7.
